# FASCICULE DE BREVET EUROPEEN

(11) **EP 1 294 602 B1**
(45) Date de publication et mention de la délivrance du brevet: **24.03.2010**
(21) Numéro de dépôt: 01940691.7
(22) Date de dépôt: 05.06.2001
(51) Int. Cl.: B60T 17/04, B60T 11/26, F16L 37/084, B60T 17/22

(54) **RESERVOIR ET SYSTEME D'ALIMENTATION COMPORTANT UN TEL RESERVOIR**
RESERVOIR UND BREMSFLÜSSIGKEITSVERSORGUNGSANLAGE MIT SOLCHEM RESERVOIR
RESERVOIR AND FEEDING SYSTEM FOR THE RESERVOIR

(30) Priorité: 09.06.2000 FR 0007966
(43) Date de publication de la demande: 26.03.2003
(73) Titulaire: ROBERT BOSCH GMBH, 70442 Stuttgart (DE)
(72) Inventeur: DEMERSSEMAN, Rémi, F-75004 PARIS (FR); COME, Philippe, F-60300 SENLIS (FR); GAFFE, François, F-93110 ROSNY-SOUS-BOIS (FR)
(74) Mandataire: Hurwic, Aleksander Wiktor
(86) Numéro de dépôt international: PCT/FR2001/001733
(87) Numéro de publication internationale: WO 2001/094171

(56) Documents cités:
- EP-A- 0 784 177
- FR-A- 2 769 275
- US-A- 1 834 404
- US-A- 4 557 261

## Description

La présente invention se rapporte principalement à un support pour connecteur rapide pour réservoir de liquide de frein et à un réservoir de liquide de frein comportant un tel support. Les systèmes de freinage sont de manière habituelle munis de deux circuits de freinage hydrauliques comportant un maître cylindre tandem délivrant, sur commande exercée par le conducteur sur une pédale de frein, un liquide de frein sous une haute pression papable d'actionner les freins disposés au niveau des roues du véhicule. Le système de freinage de type connu comporte en outre un réservoir de liquide de frein comportant un premier orifice de distribution alimentant un orifice d'entrée d'un circuit primaire du maître cylindre tandem et un second orifice de distribution alimentant un orifice d'entrée d'un circuit secondaire du maître cylindre tandem. De manière classique, le réservoir de liquide de frein comporte une cloison verticale ou sensiblement verticale partant du fond et s'étendant sur une partie de la hauteur du réservoir délimitant deux volumes séparés du réservoir dont l'alimentation s'effectue simultanément par le remplissage du réservoir par une ouverture de remplissage.

EP-A-1 019 272 décrit un dispositif d'alimentation de sécurité pour circuit hydraulique de freinage double comportant un premier réservoir supérieur de grande capacité relié par une canalisation tubulaire souple, unique à un second réservoir inférieur de capacité réduite. Seul le réservoir inférieur de capacité réduite est muni d'une cloison de délimitation de deux volumes séparés de liquide de freinage.

Bien que donnant généralement satisfaction, la sécurité procurée par le dispositif décrit dans EP-A-1 019 272 peut encore être améliorée. En effet une fuite sur un quelconque des circuits de freinage (primaire ou secondaire) provoquera l'écoulement complet du liquide de freinage du réservoir supérieur. Seule la réserve délimitée par la cloison du réservoir inférieur étant disponible pour le circuit de freinage n'ayant pas de fuite et assurant seul, dans ce cas extrême, le freinage du véhicule.

C'est par conséquent un but de la présente invention d'offrir un système de freinage présentant une grande sécurité de fonctionnement y compris en mode dégradée après une panne partielle.

C'est également un but de la présente invention d'offrir un système de freinage comportant deux circuits de freinage indépendants, une éventuelle fuite sur un des deux circuits n'affectant pas l'alimentation en liquide de frein de l'autre circuit.

C'est aussi un but de la présente invention d'offrir un système de freinage permettant, lors de l'assemblage du véhicule, un montage aisé des dispositifs d'alimentation en liquide de frein.

C'est également un but de la présente invention d'offrir un dispositif d'alimentation en liquide de frein facilitant son remplissage et le contrôle visuel de niveau par l'utilisateur final.

L'invention a principalement pour objet un réservoir de liquide de frein comportant un support pour connecteur de canalisation tubulaire dudit réservoir de liquide de frein caractérisé en ce que le support comporte une première ouverture de passage d'une première canalisation tubulaire d'alimentation en liquide de frein et une deuxième ouverture de passage d'une deuxième canalisation tubulaire d'alimentation en liquide de frein, adjacente et d'axe parallèle ou sensiblement parallèle à l'axe de la première ouverture de passage de la première canalisation tubulaire.

L'invention à également pour objet un réservoir caractérisé en ce que le support est un support de connecteur rapide.

L'invention a aussi pour objet un réservoir caractérisé en ce que le support comporte un logement d'un outil de déconnection des canalisations tubulaires.

L'invention a également pour objet un réservoir de liquide de frein caractérisé en ce que le support est solidarisé à l'extrémité des deux canalisations de sortie du réservoir de liquide de frein.

L'invention a aussi pour objet un réservoir caractérisé en ce que le diamètre interne de l'ouverture du support est inférieur au diamètre interne de la canalisation du réservoir de manière à former un épaulement de réception d'une excroissance radiale d'un connecteur rapide de canalisations tubulaires.

L'invention a aussi pour objet un réservoir caractérisé en ce que le support comporte des manchons définissant les ouvertures de passage de canalisation tubulaire, lesdits manchons pénétrant dans les embouchures des canalisations du réservoir.

L'invention a également pour objet un système d'alimentation en liquide de frein comportant un premier réservoir supérieur muni de deux cavités adaptées à contenir du liquide de frein, chacune reliée par une canalisation tubulaire à une cavité d'un second réservoir inférieur chacune des deux cavités du second réservoir inférieur comportant des moyens de connection à un circuit de freinage d'un véhicule automobile.

L'invention a aussi pour objet un système d'alimentation en liquide de frein caractérisé en ce que les canalisations tubulaires sont des canalisations tubulaires flexibles.

L'invention a aussi pour objet un système d'alimentation caractérisé en ce que les cavités de réception de liquide de frein du second réservoir inférieur forment deux chambres étanches l'une par rapport à l'autre.

L'invention a aussi pour objet un système d'alimentation caractérisé en ce que les cavités de réception de liquide de frein du second réservoir inférieur forment deux chambres étanches par rapport à l'atmosphère.

Avantageusement, le second réservoir inférieur est directement solidarisé avec un maître cylindre tandem alors que le réservoir supérieur se trouve dans un endroit aisément visible et/ou accessible par l'utilisateur du véhicule automobile.

Avantageusement, les canalisations tubulaires reliant les réservoirs sont des canalisations tubulaires flexibles.

Avantageusement, les première et seconde capacités du réservoir supérieur sont étanches l'une par rapport à l'autre mais reliées à l'atmosphère par un conduit de ventilation.

Avantageusement, les première et seconde capacités du réservoir inférieur sont isolées hermétiquement l'une par rapport à l'autre et par rapport à l'atmosphère.

Avantageusement, les réservoirs supérieur et/ou inférieur sont munis de connecteurs rapides permettant la connection et/ou la déconnection rapide lors du montage ou de l'entretien de canalisation tubulaire flexible.

L'invention sera mieux comprise au moyen de la description ci-après et des figures données comme des exemples non limitatifs et sur lesquelles :

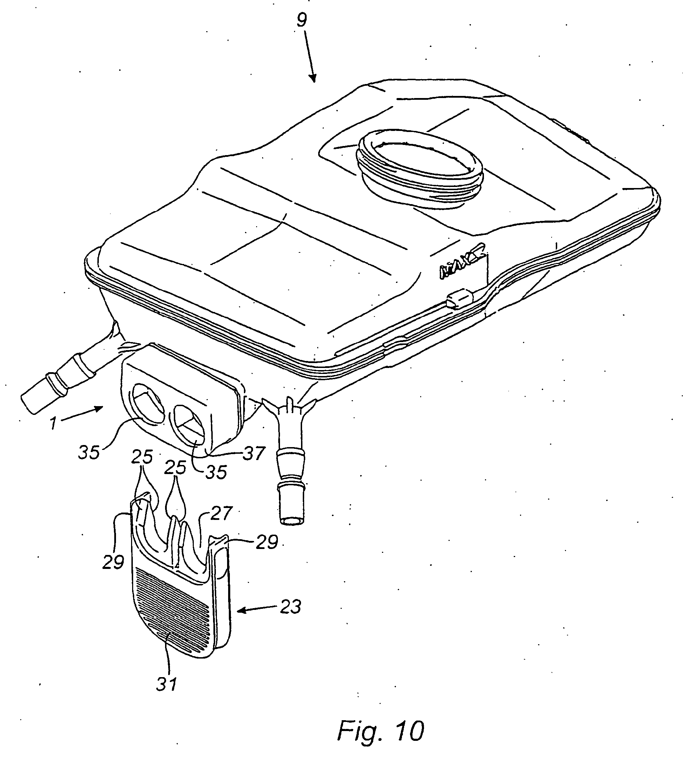

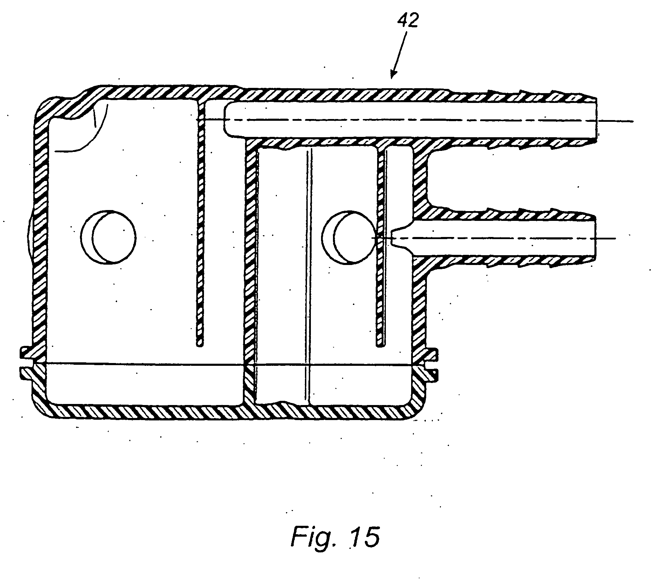

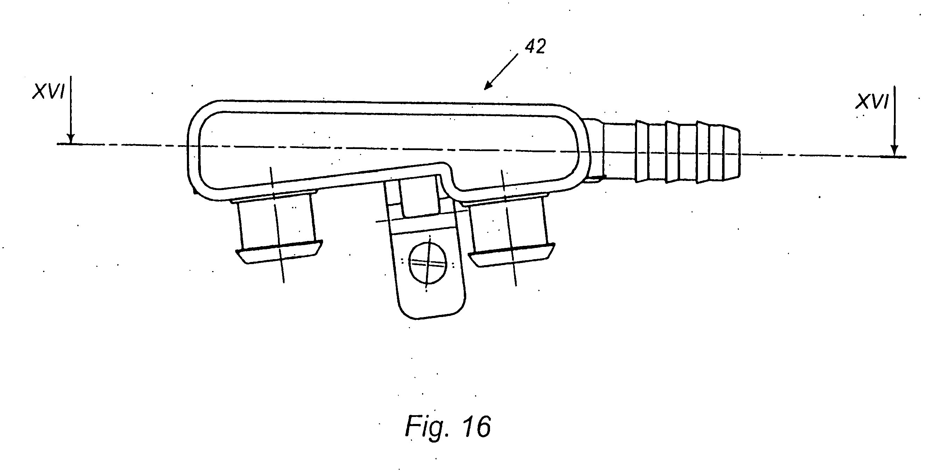

Sur les figures 1 à 17, on a utilisé les mêmes références pour désigner les mêmes éléments.
La figure 1 est une vue de côté de l'exemple préféré de réalisation d'un support pour connecteur rapide selon la présente invention.
La figure 2 est une vue en plan de la face avant de l'exemple préféré de réalisation d'un support pour connecteur rapide selon la présente invention.
La figure 3 est une vue en en plan de la face arrière de l'exemple préféré de réalisation d'un support pour connecteur rapide selon la présente invention.
La figure 4 est une vue de dessous de l'exemple préféré de réalisation d'un support pour connecteur rapide de la présente invention.
La figure 5 est une vue de dessus de l'exemple préféré de réalisation d'un support pour connecteur rapide selon la présente invention.
La figure 6 est une vue en coupe longitudinale de la figure 4 selon le plan de coupe VI - VI.
La figure 7 est une vue en perspective de trois quart arrière de l'exemple préféré de réalisation d'un support pour connecteur rapide selon la présente invention.
La figure 8 est une vue en perspective de trois quart avant de l'exemple préféré d'un support pour connecteur rapide selon la présente invention.
La figure 9 est une vue en coupe transversale de la figure 3 selon le plan de coupe IX - IX.
La figure 10 est une vue en perspective de trois quart de l'exemple préféré de réalisation d'un réservoir selon la présente invention et d'un outil de déconnexion de conduites tubulaires flexibles d'un support pour connecteur rapide selon la présente invention.
La figure 11 est une vue en coupe longitudinale de l'exemple préféré de réalisation d'un réservoir selon la présente invention.
La figue 12 est une vue en coupe longitudinale d'un réservoir dans un plan perpendiculaire au plan de coupe de la figure 11 selon la présente invention coopérant avec un outil de déconnexion de conduites tubulaires flexibles d'un support pour connecteur rapide selon la présente invention.
La figure 13 est une vue en perspective de ¾ avant d'un exemple de réalisation préféré d'un réservoir coopérant avec un support pour connecteur rapide selon la présente invention.
La figuré 14 est une vue de côté de la vue de la figure 13.
La figure 15 est une vue de côté d'un exemple préféré de réalisation d'un réservoir inférieur d'un système de freinage selon la présente invention.
La figure 16 est une vue en coupe selon le plan XVI - XVI de la figure 15.
La figure 17. est une vue en coupe axiale d'une bague à griffes coopérant avec un support pour connecteur rapide selon la présente invention.

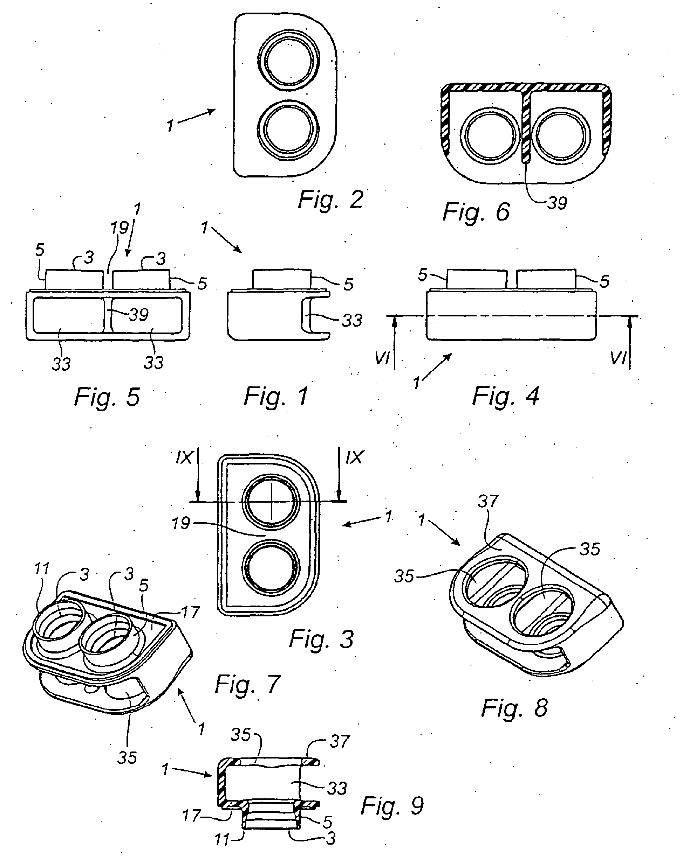

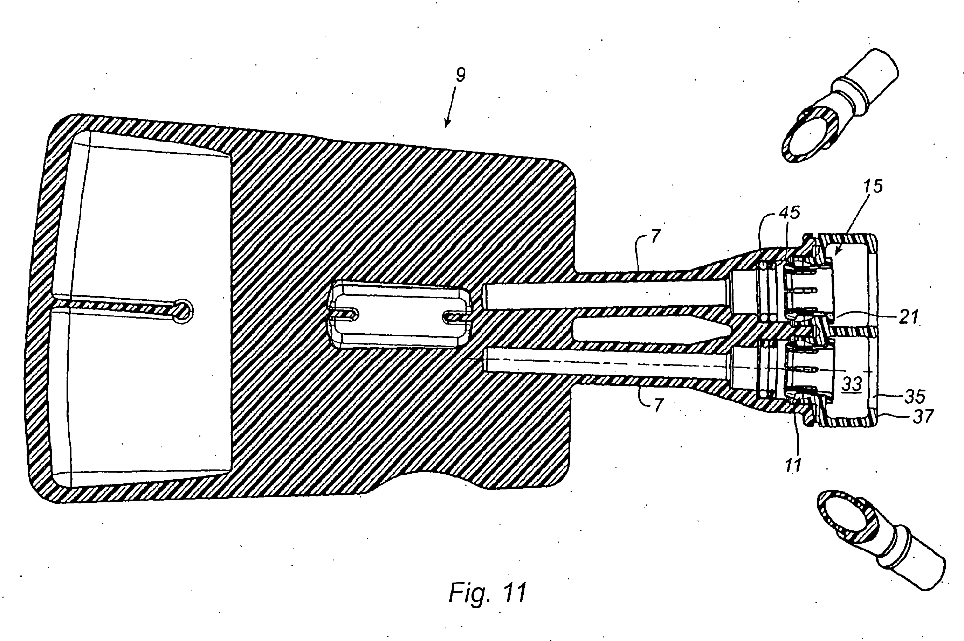

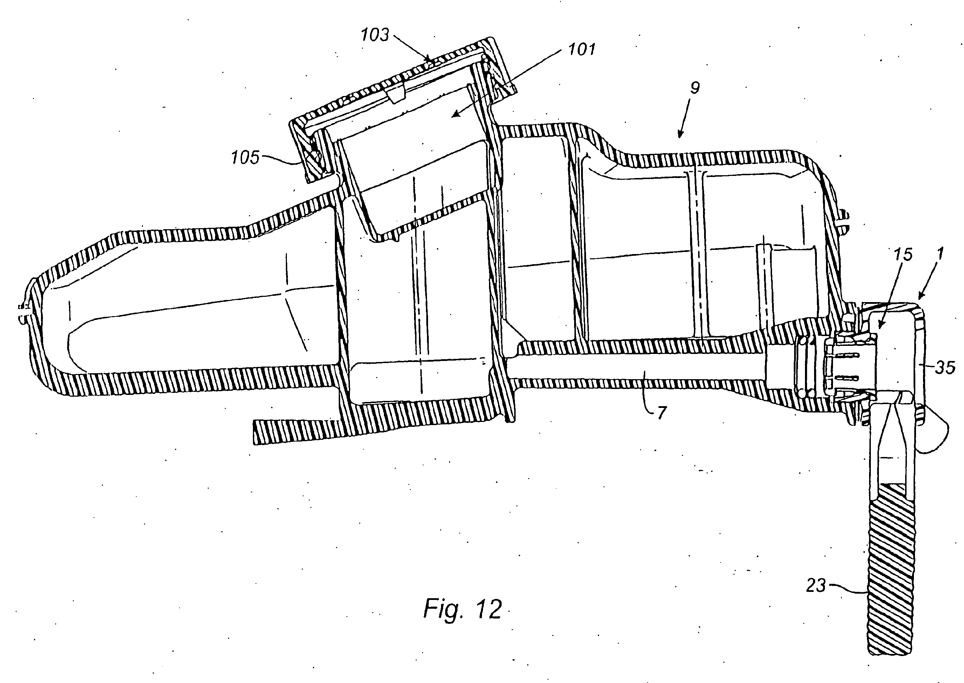

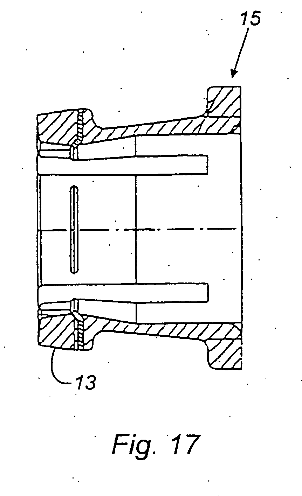

Sur les figures 1 à 9, on peut voir l'exemple préféré de réalisation d'un support de connecteur selon la présente invention présentant un encombrement faible, compatible avec l'espace disponible sous le capot moteur. Comme il sera expliqué ci-après en référence aux figures 11 et 12, on met avantageusement en oeuvre des connecteurs rapides, par exemple des connecteurs comportant une bague à griffes par exemple telle que commercialisée par la société John GUEST et telle qu'illustrée sur la figure 17. Le support selon l'invention comporte deux ouvertures 3, avantageusement adjacentes et d'axes parallèles ou sensiblement parallèles, de passage de canalisation tubulaire, de préférence de canalisations tubulaires flexibles. Chaque ouverture 3 est définie par un manchon 5 dont le diamètre radialement interne est inférieur au diamètre radialement interne d'une canalisation de sortie 7 d'un réservoir 9, comme illlustré notamment sur la figure 11. Ainsi, l'extrémité 11 du manchon 5 forme un épaulement de rétention axiale d'une protubérance radiale 13 de la bague à griffes 15 de la figure 17. Il est à noter que la réalisation de cet épaulement par variation du diamètre interne nécessite la mise en oeuvre d'un support de connecteur 1 selon la présente invention rapporté sur le réservoir 9, la réalisation d'un réservoir monobloc conduirait à une pièce non démoulable ou très difficilement démoulable. Ainsi, le support 1 selon la présente invention comporte une surface arrière 17 de solidarisation par collage ou soudure avec les sorties de canalisation 7 du réservoir 9.

De même, les manchons 5 sont avantageusement proches l'un de l'autre de manière à définir un logement 19 d'une paroi 21 commune, à leur embouchure aux deux canalisations 7 du réservoir selon la présente invention. L'utilisation d'une paroi 21 commune aux canalisations 7 permet de réduire notablement l'encombrement du réservoir 9 par rapport à la mise en oeuvre de deux canalisations 7 complètement séparées. De plus, elle assure une rigidification de l'ensemble.

Les opérations de maintenance du véhicule peuvent nécessiter la déconnection des canalisations tubulaires flexibles. L'exemple préféré de réalisation illustrée du support 1 selon la présente invention comporte des moyens aptes à coopérer avec un outil (23) de déconnection rapide de canalisation tubulaire flexible. L'outil de déconnection 23 comporte par exemple des rampes 25 bordant chacune des deux encoches 27 en U permettant d'appliquer l'outil 23 simultanément sur deux canalisations tubulaires flexibles à déconnecter. Dans l'exemple avantageux illustré, les rampes 25 sont bordées sur les bords externes de l'outil 23 par des montants 29 dont l'épaisseur correspond à l'épaisseur sensiblement constante de l'outil. A l'opposé des encoches 27, l'outil 23 est muni d'une zone de préhension 31 avantageusement striée. Le support 1 selon la présente invention comporte un logement 33 de réception et de guidage de l'outil de déconnection 23 perpendiculairement aux axes parallèles ou sensiblement parallèles de canalisation tubulaire flexible.

Dans l'exemple préféré illustré, le logement 33 a sensiblement une forme rectangulaire à angles arrondis dans la partie inférieure, du côté de son ouverture permettant l'introduction de l'outil 23. Des ouvertures 35 de passage de canalisation(s) tubulaire(s) flexible(s) sont ménagées en vis à vis des ouvertures 3 dans une face avant 37 sensiblement parallèle à la faces arrière 17 du support 1 selon la présente invention. Une nervure 39 relie avantageusement les parois arrière 17 et avant 37 entre les ouvertures 3 et 35 correspondant aux deux canalisations tubulaires flexibles.

Sur la figure 12, on peut voir l'exemple de réalisation d'un réservoir supérieur 9 selon la présente invention, comportant un orifice 101 de remplissage, avantageusement un manchon. Ledit orifice coopérant avec des moyens d'obturation, avantageusement un bouchon 103 coopérant avec un filetage 105 pratiqué sur la paroi externe de l'orifice 101.

Ledit réservoir supérieur 9 comporte au moins deux capacités de liquide de frein étanches l'une par rapport aux autres mais reliées par un conduit de ventilation à l'atmosphère.

Le réservoir supérieur 9 communique de manière étanche avec un système de freinage aux moyens de canaux, avantageusement deux canalisations 7. La connexion avec le système de freinage à l'aide d'un support pour connecteur rapide représenté à la figure 1.

Les orifices des canalisations 7, débouchent dans le réservoir supérieur 9 dans deux capacités de liquide de frein séparés, la séparation se faisant de manière classique par une cloison verticale ou sensiblement, partant du fond et s'étendant sur une partie de la hauteur du réservoir supérieur 9 délimitant deux volumes séparés. Leur remplissage se fait simultanément par l'ouverture de remplissage.

Le réservoir supérieur 9 comporte avantageusement des moyens de repérage du niveau de liquide de frein contenu dans le réservoir supérieur, avantageusement deux moyens - Le premier moyen peut être idéalement une indication, avantageusement un marquage sur la paroi latérale du réservoir supérieur, du niveau maximum et du niveau minimum de remplissage en liquide de frein.

La paroi du réservoir supérieur 9 (non représentée), devant permettre de voir le liquide de frein au moins à l'emplacement de l'indication. Le second moyen peut être idéalement un moyen électrique, avantageusement un système connu de flotteur avec un contact électrique.

Le réservoir 9 peut être connecté à d'autres organes non représentés par au moins un moyen de connexion 119, avantageusement deux, le deuxième moyen de connexion 121 étant visible sur la figue 10.

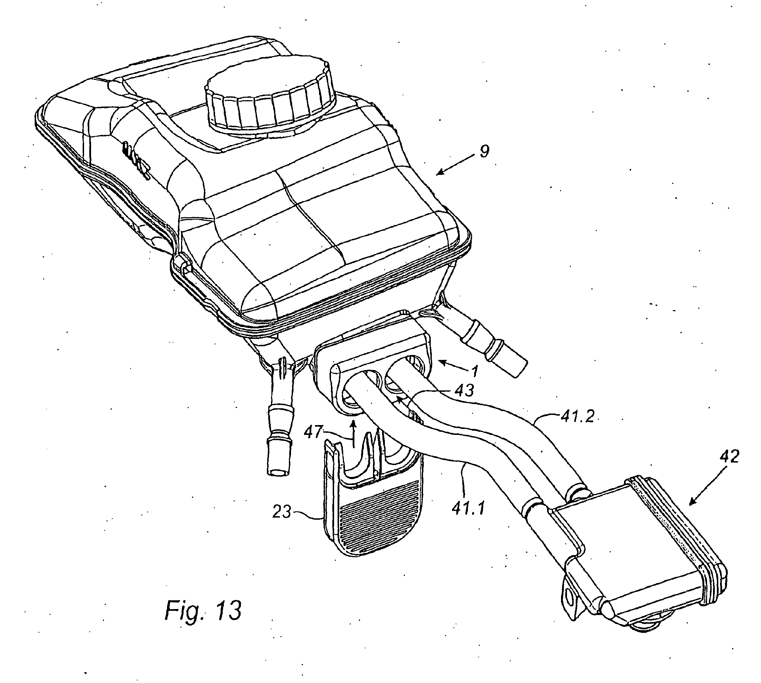

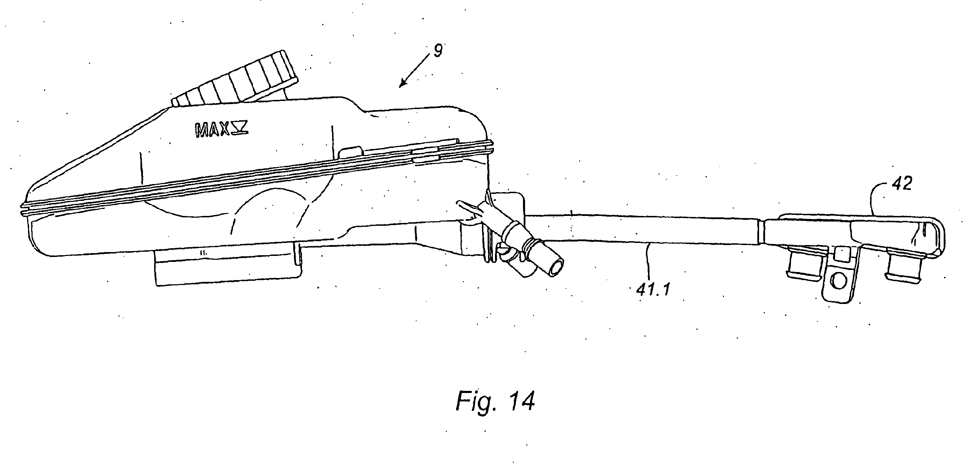

Sur les figures 13 et 14, on peut voir l'exemple préféré de réalisation d'un dispositif d'alimentation en liquide de freinage selon la présente invention comportant un premier réservoir supérieur 9 de grande capacité dont une première cavité de réception de liquide de frein est reliée par une première canalisation tubulaire flexible 41.1 à une première chambre d'un second réservoir inférieur 42 et dont une seconde cavité de réception de liquide de frein est reliée par une seconde canalisation tubulaire flexible 41.2 à une deuxième chambre du second réservoir inférieur 42. Dans l'exemple illustré, la pente des canalisations 41.1 et 41.2 entre le réservoir supérieur 9 et le réservoir inférieur est très faible par exemple égale à 4°. Dans un tel cas, il est avantageux d'utiliser des canalisations lisses (41.1 et 41.2) de manière à éviter la formation et la rétention de bulles dans ces canalisations.

La capacité du réservoir inférieur 42 est nettement plus faible que la capacité du réservoir supérieur 9, avantageusement, la capacité du réservoir inférieur 42 est de l'ordre du dizième de la capacité du réservoir supérieur 9.

Dans l'exemple préféré de réalisation, on assure le préassemblage des canalisations 41.1 et 41.2 avec le réservoir inférieur, par exemple en les enfilant chacune sur un embout ayant des rainures en sapin. Sur la chaîne de montage de véhicules automobiles, le premier réservoir 9 et le second réservoir 42 sont solidarisés avec leur support et les extrémités de canalisation tubulaire flexibles 41.1 et 41.2 sont insérées dans les ouvertures 35 et 3 selon la flèche 43, sont enfilées dans les manchons 5 et sur les bagues à griffes 15 qui en assurent l'immobilisation dans une position dans laquelle au moins un des joints 45 assure une connection étanche. Les canalisations 41.1 et 41.2 peuvent être connectées sur les canalisations 7 du réservoir supérieur 9 manuellement ou, en variante par un robot.

Si, par exemple pour une opération d'entretien, on désire déconnecter les canalisations 41. est 41.2, avantageusement après avoir retiré le liquide de frein du réservoir supérieur 9, on introduit l'outil de déconnection 23 selon la flèche 47. Les montants 29 sont guidés par les parois internes de la chambre 33 et la rampe 25 repousse la bague à griffes d'immobilisation 15 selon la flèche 43. Il en résulte la libération de canalisations tubulaires flexibles 41.1 et 41.2.

Bien qu'il soit avantageux d'utiliser un outil 23 assurant la déconnection simultanée des deux canalisations tubulaires flexibles 41.1 et 41.2, il est bien entendu que la mise en oeuvre d'un outil permettant une déconnection successive de ces deux canalisations tubulaires flexibles ne sort pas du cadre de la présente invention.

Le réservoir supérieur 9, inférieur 42 et le support 1 sont avantageusement réalisés en une matière plastique rigide compatible avec le liquide de frein telle que du polypropylène. L'outil de déconnection 23 est par exemple réalisé en polypropylène ou en polyamide. Les canalisations tubulaires 41.1 et 41.2 sont avantageusement réalisées en un matière plastique souple compatible avec le liquide de frein.

La présente invention s'applique notamment à l'industrie automobile.

La présente invention s'applique principalement au freinage.

## Revendications

1. Réservoir de liquide de frein comportant un support pour connecteur (15) d'une extrémité de canalisation tubulaire (41.1, 41.2) dudit réservoir (9) de liquide de frein **caractérisé en ce que** le support comporte une première ouverture (3) de passage d'une première canalisation tubulaire (41.1) d'alimentation en liquide de frein et une deuxième ouverture (3) de passage d'une deuxième canalisation tubulaire (41.2) d'alimentation en liquide de frein, adjacente et d'axe parallèle ou sensiblement parallèle à l'axe de la première ouverture (3) de passage de la première canalisation tubulaire (41.1).

2. Réservoir selon la revendication 1 **caractérisé en ce que** ledit support est un support de connecteur rapide (15).

3. Réservoir selon la revendication 1 ou 2 **caractérisé en ce que** le support comporte un logement (33) d'un outil de déconnection (23) des canalisations tubulaires (41.1, 41.2).

4. Réservoir (9) de liquide de frein selon la revendication 1,2 ou 3 **caractérisé en ce que** le support est solidarisé à l'extrémité des deux canalisations (7) de sortie du réservoir (9) de liquide de frein.

5. Réservoir selon la revendication 4 **caractérisé en ce que** le diamètre interne de l'ouverture (3) du support (1) est inférieur au diamètre interne de la canalisation (7) du réservoir (9) de manière à former un épaulement (11) de réception d'une excroissance radiale d'un connecteur rapide (15) de canalisations tubulaires (41.1, 41.2).

6. Réservoir selon la revendication 4 ou 5 **caractérisé en ce que** le support (1) comporte des manchons (5) définissant les ouvertures (3) de passage de canalisation tubulaire (41.1, 41.2), lesdits manchons pénétrant dans les embouchures des canalisations (7) du réservoir (9).

7. Système d'alimentation en liquide de frein comportant un premier réservoir supérieur (9) selon l'une quelconque des revendications 1 à 6 muni de deux cavités adaptées à contenir du Liquide de frein, chacune reliée par une canalisation tubulaire (4-1.1, 41.2) à une cavité d'un second réservoir inférieur (42) chacune des deux cavités du second réservoir inférieur (42) comportant des moyens de connection à un circuit de freinage d'un véhicule automobile.

8. Système d'alimentation en liquide de frein selon la revendication 7 **caractérisé en ce que** les canalisations tubulaires (41.1, 41.2) sont des canalisations tubulaires flexibles.

9. Système d'alimentation selon les revendications 7 ou 8 **caractérisé en ce que** les cavités de réception de liquide de frein du second réservoir inférieur (42) forment deux chambres étanches l'une par rapport à l'autre.

10. Système d'alimentation selon les revendications 7, 8 ou 9 **caractérisé en ce que** les cavités de réception de liquide de frein du second réservoir inférieur (42) forment deux chambres étanches par rapport à l'atmosphère.

## Claims

1. Brake-fluid tank comprising a support for a connector (15), intended for tubular pipes (41.1, 41.2) of a brake-fluid tank (9), **characterised in that** the support comprises a first through-hole (3) for the passage of a first brake-fluid supply tubular pipe (41.1) and a second through-hole (3) for the passage of a second brake-fluid supply tubular pipe (41.2), which is adjacent and the axis of which is parallel or substantially parallel to the axis of the first through-hole (3) for the first tubular pipe (41.1).

2. Tank according to claim 1, **characterised in that** said support is a support for a quick connector (15).

3. Tank according to claim 1 or 2, **characterised in that** it comprises an accommodating cavity (33) for a tool (23) intended for the disconnection of the tubular pipes (41.1, 41.2).

4. Brake-fluid tank (9), according to any one of the preceding claims, **characterised in that** the support is made integral with the end parts of both outlet pipes (7) of the brake-fluid tank (9).

5. Tank according to claim 4, **characterised in that** the inner diameter of the through-hole (3) in the support (1) is smaller than the inner diameter of the pipe (7) of the tank (9), so as to form a shoulder (11) for a radial protrusion of a quick connector (15) for tubular pipes (41.1, 41.2).

6. Tank according to claim 4 or 5, **characterised in that** the support (1) comprises sleeves (5), which define the through-holes (3) for the tubular pipes (41.1, 41.2), said sleeves entering the mouths of the pipes (7) in the tank (9).

7. Brake-fluid supply system, comprising a first top tank (9) provided with two brake-fluid chambers, each one being connected, through a tubular pipe (41.1, 41.2), to a chamber in a second bottom tank (42), wherein each one of the two chambers of the second bottom tank (42) is fitted with connecting means for a brake circuit of a motor vehicle.

8. Brake-fluid supply system according to claim 7, **characterised in that** the tubular pipes (41.1, 41.2.) are flexible tubular pipes.

9. Brake-fluid supply system according to claim 7 or 8, **characterised in that** the brake-fluid chambers in the second bottom tank (42) form two chambers which are tight each with respect to the other.

10. Brake-fluid supply system according to claim 7, 8 or 9, **characterised in that** the brake-fluid chambers in the second bottom tank (42) form two chambers which are tight with respect to the atmosphere.

## Patentansprüche

1. Bremsflüssigkeitsbehälter mit einem Halter für einen Anschluss (15) eines Endes einer Rohrleitung (41.1, 41.2) des Bremsflüssigkeitsbehälters (9), **dadurch gekennzeichnet, dass** der Halter eine erste Öffnung (3) für den Durchgang einer ersten Rohrleitung (41.1) zur Versorgung mit Bremsflüssigkeit und eine an die erste Öffnung (3) für den Durchgang der ersten Rohrleitung (41.1) angrenzende zweite Öffnung (3) für den Durchgang einer zweiten Rohrleitung (41.2) zur Versorgung mit Bremsflüssigkeit aufweist, deren Achse parallel oder im Wesentlichen parallel zur Achse der ersten Öffnung (3) für den Durchgang der ersten Rohrleitung (41.1) verläuft.

2. Behälter nach Anspruch 1, **dadurch gekennzeichnet, dass** der Halter ein Halter für einen Schnellanschluss (15) ist.

3. Behälter nach Anspruch 1 oder 2, **dadurch gekennzeichnet, dass** der Halter eine Aufnahme (33) für ein Werkzeug (23) zur Trennung der Rohrleitungen (41.1, 41.2) aufweist.

4. Bremsflüssigkeitsbehälter (9) nach Anspruch 1, 2 oder 3, **dadurch gekennzeichnet, dass** der Halter am Ende der beiden Austrittsleitungen (7) des Bremsflüssigkeitsbehälters (9) fest verbunden ist.

5. Behälter nach Anspruch 4, **dadurch gekennzeichnet, dass** der Innendurchmesser der Öffnung (3) des Halters (1) geringer ist als der Innendurchmesser der Leitung (7) des Behälters (9), so dass ein Absatz (11) zur Aufnahme eines radialen Vorsprungs eines Schnellanschlusses (15) für Rohrleitungen (41.1, 41.2) gebildet ist.

6. Behälter nach Anspruch 4 oder 5, **dadurch gekennzeichnet, dass** der Halter (1) Muffen (5) aufweist, die die Öffnungen (3) für den Durchgang der Rohrleitungen (41.1, 41.2) definieren, wobei die Muffen in die Eingänge der Leitungen (7) des Behälters (9) dringen.

7. System zur Versorgung mit Bremsflüssigkeit, mit einem ersten, oberen Behälter (9) nach einem der Ansprüche 1 bis 6, der mit zwei Hohlräumen versehen ist, die dazu geeignet sind, Bremsflüssigkeit zu enthalten, wobei jeder Hohlraum über eine Rohrleitung (41.1, 41.2) mit einem Hohlraum eines zweiten, unteren Behälters (42) verbunden ist, wobei jeder der beiden Hohlräume des zweiten, unteren Behälters (42) Mittel zur Verbindung mit einem Kraftfahrzeugbremskreis aufweist.

8. System zur Versorgung mit Bremsflüssigkeit nach Anspruch 7, **dadurch gekennzeichnet, dass** die Rohrleitungen (41.1, 41.2) flexible Rohrleitungen sind.

9. Versorgungssystem nach Anspruch 7 oder 8, **dadurch gekennzeichnet, dass** die Hohlräume zur Aufnahme von Bremsflüssigkeit des zweiten, unteren Behälters (42) zwei zueinander dichte Kammern bilden.

10. Versorgungssystem nach Anspruch 7, 8 oder 9, **dadurch gekennzeichnet, dass** die Hohlräume zur Aufnahme von Bremsflüssigkeit des zweiten, unteren Behälters (42) zwei gegenüber der Umgebung dichte Kammern bilden.
